# FASCICULE DE BREVET EUROPEEN

(11) **EP 0 737 416 B1**
(45) Date de publication et mention de la délivrance du brevet: **08.12.1999**
(21) Numéro de dépôt: 96440026.1
(22) Date de dépôt: 03.04.1996
(51) Int. Cl.: A01B 73/00, A01C 7/08, A01C 15/00

(54) **Dispositif de recouvrement des graines implantées dans le sol destiné à équiper un semoir agricole**
Zustreichvorrichtung für eine Sämaschine
Seed rake for a seeder

(30) Priorité: 13.04.1995 FR 9504687
(43) Date de publication de la demande: 16.10.1996
(73) Titulaire: KUHN S.A., F-67700 Saverne (FR)
(72) Inventeur: Klein, Jean, 67330 Bouxwiller (FR)

(56) Documents cités:
- EP-A- 0 311 221
- GB-A- 2 277 665
- US-A- 3 202 119

## Description

La présente invention se rapporte à un dispositif de recouvrement destiné à équiper un semoir. Ce dispositif de recouvrement a pour fonction de recouvrir les graines implantées au préalable dans le sol par le semoir et/ou d'égaliser et de niveler la couche superficielle de terre recouvrant lesdites graines. Ce dispositif de recouvrement comporte :
- au moins une structure support destinée à être fixée sur ledit semoir,
- au moins un bras lié à la (les) structure(s) support au moyen d'une première articulation,
- une structure porteuse s'étendant transversalement à la direction d'avance au travail et liée au(x) bras au moyen d'au moins une deuxième articulation,
- au moins un outil de recouvrement fixé à la structure porteuse,
- un premier moyen de réglage permettant de régler l'angle d'inclinaison de l' (des) outil(s) de recouvrement et, un deuxième moyen de réglage permettant d'approcher ou d'éloigner le (les) outil(s) de recouvrement de la (des) structure(s) support.

Un tel dispositif de recouvrement destiné à équiper un semoir est connu par l'homme de l'art. Ce dispositif de recouvrement comporte dans les grandes lignes une structure support fixée à un semoir, un bras supérieur, un bras inférieur, un support intermédiaire, une structure porteuse et des outils de recouvrement.

Chaque bras est lié, à l'une de ces extrémités, à ladite structure support au moyen d'une première articulation d'axe longitudinal horizontal et transversal à la direction d'avance au travail et, à l'autre extrémité au support intermédiaire au moyen d'une deuxième articulation d'axe longitudinal parallèle à l'axe longitudinal de la première articulation.

A l'extrémité inférieure du support intermédiaire est fixée la structure porteuse s'étendant transversalement à la direction d'avance au travail sur laquelle sont fixés, à intervalle régulier, des outils de recouvrement dont l'angle d'inclinaison est réglable à l'aide d'un moyen de réglage. Ce moyen de réglage permet de pivoter le support intermédiaire autour de l'axe longitudinal de la deuxième articulation du bras inférieur dans différentes positions au moyen de trous de réglage situés à différentes hauteurs sur ledit support intermédiaire et d'une broche, les trous de réglage et la broche formant la deuxième articulation du bras supérieur. Un tel pivotement du support intermédiaire a pour effet de changer la position de la structure porteuse et par conséquent l'angle d'inclinaison des outils de recouvrement.

Il est également prévu un autre moyen de réglage permettant d'approcher ou d'éloigner les outils de recouvrement de la structure support. A cet effet, la structure support comporte un ensemble extensible permettant de positionner les outils de recouvrement par rapport à ladite structure support dans la direction d'avance au travail. Cet ensemble extensible comporte dans les grandes lignes deux éléments liés entre eux au moyen d'une broche traversant de part en part les deux éléments au moyen de trous effectués dans ces derniers.

Les deux bras, une partie de la structure support et le support intermédiaire forment un parallélogramme, lequel est compris dans un plan vertical et parallèle à la direction d'avance au travail, de manière à permettre un débattement de la structure porteuse et des outils de recouvrement tout en conservant l'angle d'inclinaison de ces derniers.

Ce dispositif de recouvrement est en sus doté d'un mécanisme de délestage ou de lestage des outils de recouvrement lequel est implanté latéralement au parallélogramme. Ce mécanisme de délestage ou de lestage est composé dans les grandes lignes, d'un ressort de traction lié à la structure support et d'une biellette de réglage liée d'une part au ressort de traction et d'autre part à un des bras du parallélogramme.

Ce dispositif de recouvrement comporte encore un mécanisme de verrouillage implanté latéralement au parallélogramme de l'autre côté du mécanisme de délestage. Ce mécanisme de verrouillage est lié d'une part à la structure support et d'autre part à un des bras dudit parallélogramme. Il est destiné à verrouiller le débattement du dispositif de recouvrement lors du transport du semoir et à autoriser un certain débattement dudit dispositif de recouvrement lors du travail.

Ce dispositif de recouvrement connu présente cependant un certain nombre d'inconvénients. En effet, lors du transport du semoir équipé du dispositif de recouvrement tel que décrit ci-avant, on est souvent amené à réduire le porte-à-faux dudit semoir lorsque ce dernier est du type porté, ou à réduire la largeur de transport lorsqu'il est transporté en long à l'aide d'un chariot ou de roues porteuses.

A cet effet, différentes solutions sont connues pour résoudre ce problème. Une première solution consiste à démonter le dispositif de recouvrement du semoir ce qui pose deux problèmes majeurs. Un premier problème réside dans le fait que le démontage du dispositif de recouvrement est une opération pénible qui demande beaucoup de temps. Le second problème quant à lui est que, lorsque ledit dispositif de recouvrement est démonté du semoir, il faut de nouveau le monter autre part sur ledit semoir ou le chariot pour pouvoir le transporter.

Une autre solution pour réduire le porte-à-faux ou la largeur de transport consiste à pivoter le dispositif de recouvrement vers le haut autour d'une ou plusieurs articulations de manière qu'il s'étende à la verticale. Le dispositif de recouvrement peut être pivoté vers le haut soit manuellement, soit mécaniquement à l'aide d'un vérin hydraulique par exemple.

Dans ce cas de figure cette conception du dispositif de recouvrement présente également des inconvénients. En effet, on notera dans un premier temps que les semoirs actuels comportent en règle générale un certain nombre d'éléments d'implantation de la semence dans le sol disposés suivant plusieurs rangées transversales à la direction d'avance au travail s'étendant relativement loin vers l'arrière du semoir. Une telle conception impose un dispositif de recouvrement relativement long de manière qu'il puisse s'étendre derrière les éléments d'implantation de la semence dans le sol lors du travail. Un tel dispositif de recouvrement donne, lorsque ce dernier est pivoté vers le haut, une certaine hauteur au semoir ce qui est particulièrement préjudiciable lors du transport ou du remisage dudit semoir. En sus, dans le cas ou le dispositif de recouvrement est pivotable vers le haut manuellement, l'opérateur doit fournir un effort musculaire considérable pour arriver au terme de cette opération de pivotement compte tenu de la masse à déplacer.

Il va de soi qu'une telle opération n'est pas sans danger pour l'opérateur, ni très ergonomique, notamment lorsque le dispositif de recouvrement a une grande largeur ce qui ce traduit par une masse importante à pivoter.

Le cas où le dispositif de recouvrement est pivotable mécaniquement à l'aide d'un vérin, est une conception qui revient relativement chère à réaliser.

Enfin, on notera encore qu'une telle conception du dispositif de recouvrement tel que décrit ci-avant comporte une multitude d'éléments et un grand nombre d'articulations ce qui se traduit par un coût de réalisation élevé.

Le but de la présente invention est de remédier aux inconvénients du dispositif de recouvrement de l'art antérieur.

A cet effet, l'ensemble constitué par le (les) bras, la structure porteuse et l'(les) outil(s) de recouvrement, est escamotable par coulissement dans la direction d'avance au travail, de manière à réduire l'encombrement notamment lors du transport.

Avec un tel dispositif de recouvrement, l'opérateur n'a plus besoin de démonter ledit dispositif pour le transport ou de le pivoter vers le haut. Une telle conception permet en sus de réaliser un dispositif de recouvrement à un moindre coût tout en obtenant un dispositif simple, ergonomique et relativement léger. En effet, il suffit à l'opérateur d'escamoter l'ensemble constitué par le (les) bras, la structure porteuse et l' (les) outil(s) de recouvrement par coulissement d'une manière semblable au fonctionnement d'un tiroir. L'escamotage du dispositif de recouvrement, selon la présente invention, est donc substantiellement simplifié, peut être effectué avec un moindre effort et se fait sans risque majeur.

Il pourra du reste être prévu que chaque structure support comporte deux ailes s'étendant chacune dans un plan au moins sensiblement parallèle à la direction d'avance au travail, lesdites ailes formant une chape dans laquelle s'étend un bras correspondant.

En sus, il pourra également être prévu que chaque structure support comporte un moyen de coulissement permettant de coulisser facilement le bras correspondant en vu de l'escamotage ou de la mise en position de travail du dispositif de recouvrement.

De préférence, ce moyen de coulissement comporte un galet d'axe de rotation au moins sensiblement horizontal et perpendiculaire à la direction d'avance au travail sur lequel est destiné à coulisser le bras correspondant lors de l'escamotage ou de la mise en position de travail du dispositif de recouvrement. Ainsi, les deux ailes de chaque structure support et le galet forment un excellent guidage du bras correspondant permettant un escamotage ou une mise en position de travail du dispositif de recouvrement avec une grande facilité.

Selon une caractéristique supplémentaire de l'invention la première articulation liant le bras correspondant à la structure support correspondante est du type pivot d'axe longitudinal dirigé au moins sensiblement horizontalement et au moins sensiblement perpendiculairement à la direction d'avance au travail, de manière à autoriser un débattement dudit bras autour de l'axe longitudinal de ladite première articulation dans un plan au moins sensiblement vertical et au moins sensiblement parallèle à ladite direction d'avance au travail. Un tel débattement du bras autour de l'axe longitudinal de la première articulation permet au dispositif de recouvrement une bonne adaptation au sol lors du travail, notamment lorsque ce dernier comporte des dénivellations importantes.

Selon une autre caractéristique de l'invention, en position escamotée, chaque bras s'étend vers l'avant alors que l'(les) outil(s) de recouvrement s'étend(ent) près de la (des) structure(s) support. Une telle conception permet de réduire, lors du transport, le porte-à-faux ou la largeur de transport d'un semoir équipé du dispositif selon l'invention sans pour autant augmenter l'encombrement général de ce dernier.

Selon une autre caractéristique supplémentaire de l'invention, il est prévu au moins un moyen de maintien destiné à maintenir l'ensemble constitué par le (les) bras, la structure porteuse et l'(les) outil(s) de recouvrement dans sa position escamotée.

Avantageusement, ce moyen de maintien comporte un dispositif d'ancrage et un dispositif d'appui. Ce dispositif d'ancrage comporte au moins un axe d'ancrage solidaire du bras correspondant lequel axe d'ancrage est destiné à venir se loger dans au moins une encoche d'ancrage prévue dans la structure support correspondante. Le dispositif d'appui quant à lui comporte au moins un axe d'appui solidaire du bras correspondant lequel axe d'appui est destiné à venir en contact sur un appui sur la structure support correspondante. Un tel moyen de maintien permet d'escamoter et de maintenir en position escamotée l'ensemble constitué par le (les) bras, la structure porteuse et l'(les) outil(s) de recouvrement en un geste simple et rapide.

Selon une autre caractéristique supplémentaire de l'invention, l' (les) outil(s) de recouvrement est (sont) escamotable(s) autour de la deuxième articulation de manière qu'il(s) s'étende(nt) vers le haut et/ou vers l'avant.

Avantageusement, il est prévu un moyen de verrouillage permettant de verrouiller l' (les) outil(s) de recouvrement dans la (leur) position(s) escamotée(s). Cet escamotage du (des) outil(s) de recouvrement permet de réduire davantage l'encombrement, notamment lors du transport.

L'invention concerne également un semoir comportant un dispositif de stockage de la semence, un dispositif de dosage de la semence, un dispositif de distribution et de véhiculage de la semence véhiculant la semence depuis le dispositif de dosage jusqu'à un dispositif d'implantation de semence dans le sol lequel comporte des éléments d'implantation de la semence dans le sol disposés suivant plusieurs rangées au moins sensiblement transversales à la direction d'avance au travail et un dispositif de recouvrement lequel présente une ou plusieurs des caractéristiques ci-dessus.

Avantageusement, l'ensemble constitué par le (les) bras, la structure porteuse et l' (les) outil(s) de recouvrement est escamotable par coulissement dans la direction d'avance au travail de manière que l' (les) outil(s) de recouvrement s'étende(nt) au-dessus du dispositif d'implantation de semence dans le sol. Un tel escamotage du (des) bras, de la structure porteuse et de l' (des) outil(s) de recouvrement permet avantageusement de réduire considérablement le volume initial du semoir, lorsque ces différents éléments sont escamotés, de surcroît l'énergie à fournir par l'opérateur pour mener à bien cette opération est minime.

Avantageusement, la dernière rangée d'éléments d'implantation de la semence dans le sol est escamotable.

De préférence, chaque élément d'implantation de la semence dans le sol de la dernière rangée est pivotable, vers le haut, autour d'une articulation d'axe longitudinal au moins sensiblement horizontal et transversal à la direction d'avance au travail, et qu'il est prévu un dispositif de maintien destiné à maintenir ledit élément d'implantation de la semence dans le sol dans une position escamotée. Une telle conception autorisant, en sus, un escamotage de la dernière rangée d'éléments d'implantation de la semence dans le sol permet de réduire davantage le porte-à-faux ou la largeur de transport en long du semoir.

L'invention concerne encore une machine combinée de travail du sol et de semis comportant une machine agricole de la préparation d'un lit de semence et un semoir tel que décrit ci-dessus.

D'autres objets et caractéristiques de l'invention ressortiront de la description ci-après avec référence aux dessins annexés qui représentent à titre d'exemples non limitatifs, quelques formes de réalisation du dispositif de recouvrement selon l'invention.

Sur ces dessins :
- la figure 1 représente une vue latérale d'une machine combinée de travail du sol et de semis en position de travail, liée à un véhicule moteur et équipée du dispositif de recouvrement selon l'invention.
- La figure 2 représente une vue latérale du semoir équipant la machine combinée de travail du sol et de semis représentée sur la figure 1, celui-ci étant en position de transport et lié à un véhicule moteur.
- La figure 3 est une vue latérale du dispositif de recouvrement seul en position de travail équipant la machine combinée de travail du sol et de semis représenté sur la figure 1, à une autre échelle.
- La figure 4 est une vue de dessus du dispositif de recouvrement représenté sur la figure 3.
- La figure 5 est une vue en coupe suivant le plan V-V définie sur la figure 3 à une autre échelle.
- La figure 6 est une vue en coupe suivant le plan VI-VI définie sur la figure 4, à une autre échelle.
- La figure 7 est une vue latérale du dispositif de recouvrement seul en position escamotée équipant le semoir représenté sur la figure 2, à une autre échelle.

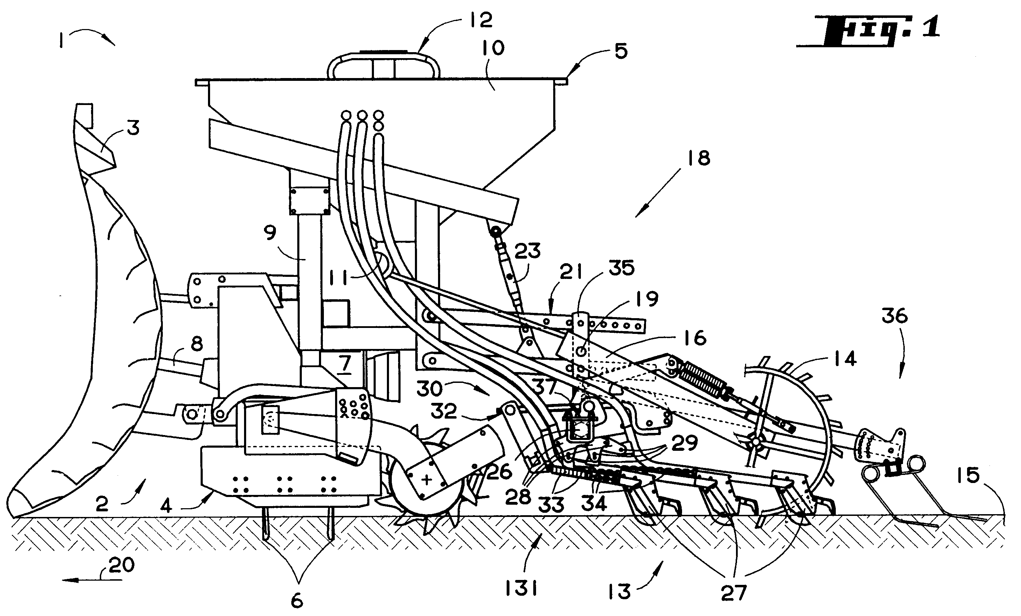

La figure 1 représente une machine agricole combinée de travail du sol et de semis (1) liée à l'attelage arrière (2) d'un véhicule moteur (3).

Cette machine agricole combinée de travail du sol et de semis (1) comprend une machine de préparation d'un lit de semence (4) et un semoir (5).

La machine de préparation d'un lit de semence (4) comporte des outils animés (6) qui sont entraînés par l'intermédiaire de moyens d'entraînement (7) recevant eux-mêmes le mouvement d'un arbre de prise de puissance (non représenté) du véhicule moteur (3) au moyen d'un arbre de transmission à joints universels (8).

Le semoir, quant à lui, comporte un châssis (9) supportant un dispositif de stockage de la semence qui est une trémie (10) dans laquelle se trouve la semence à implanter dans le lit de semence préparé par la machine de préparation du lit de semence (4). Ce semoir (5) est, selon l'exemple représenté, du type pneumatique. A cet effet, à la base de la trémie (10) est prévu un dispositif de dosage (11) de la semence à la sortie duquel la semence est transportée par un dispositif de distribution et de véhiculage (12) jusqu'à un dispositif d'implantation de la semence dans le sol (13). Le dispositif de dosage est entraîné par une roue (14) roulant sur le sol (15) lors du travail, et le dispositif de distribution et de véhiculage (12) est entraîné par les moyens d'entraînement (7) évoqués ci-dessus.

La roue (14) est liée pivotante à l'une des extrémités d'un carter de transmission (16). L'autre extrémité du carter de transmission (16) est liée à une structure de liaison (18) au moyen d'une articulation (19) du type pivot d'axe longitudinal au moins sensiblement horizontal et au moins sensiblement orthogonal à une direction d'avance au travail (20).

La structure de liaison (18) comporte deux parallélogrammes (21) déformables dans un plan au moins sensiblement vertical et au moins sensiblement orthogonal à la direction d'avance au travail (20) (en fait sur la figure 1, ces deux parallélogrammes (21) se superposent de sorte qu'on n'en voit qu'un seul).

Ladite structure de liaison (18) comporte également deux tirants (23) de longueur réglable implantés entre chaque parallélogramme (21) et le châssis (9). Chaque tirant (23) est lié d'une part au châssis (9) et d'autre part au parallélogramme déformable (21) respectif.

La structure de liaison (18) comporte en sus une traverse tubulaire (26) s'étendant au moins sensiblement horizontalement et au moins sensiblement orthogonalement à la direction d'avance au travail (20).

Le dispositif d'implantation de la semence dans le sol (13) comporte des éléments d'implantation (27) de la semence dans le sol disposés suivant plusieurs rangées au moins sensiblement transversales à la direction d'avance au travail (20). Chaque élément d'implantation (27) est lié à la traverse tubulaire (26) au moyen d'un support (28) bridé sur cette dernière auquel est lié ledit élément d'implantation (27) au moyen d'une articulation (29) du type pivot d'axe longitudinal au moins sensiblement horizontal et au moins sensiblement orthogonal à la direction d'avance au travail (20). Le dispositif d'implantation (13) est en sus doté d'un dispositif de terrage (30) comportant dans les grandes lignes un mécanisme de réglage centralisé (32) agissant sur des ressorts de terrage (33) liés chacun à un élément d'implantation (27) correspondant au moyen d'une chaînette (34). Ce dispositif de terrage (30) permet de varier la profondeur d'implantation de la semence dans le sol en fonction des conditions de travail. Le dispositif d'implantation de la semence dans le sol (13) peut également être approché ou éloigné du châssis (9) du semoir (5) suivant la direction d'avance au travail (20) afin d'amener ledit dispositif d'implantation de la semence dans le sol (13) dans le proche voisinage de la machine de préparation du lit de semence (4) quelle que soit cette dernière pour réduire le porte-à-faux et l'encombrement de la machine agricole combinée de travail du sol et de semis (1). A cet effet, selon l'exemple représenté, chaque parallélogramme déformable (21) comporte, un côté (35) fixé à la traverse tubulaire (26) lequel est déplaçable par rapport au reste du parallélogramme déformable (21) suivant la direction d'avance au travail (20).

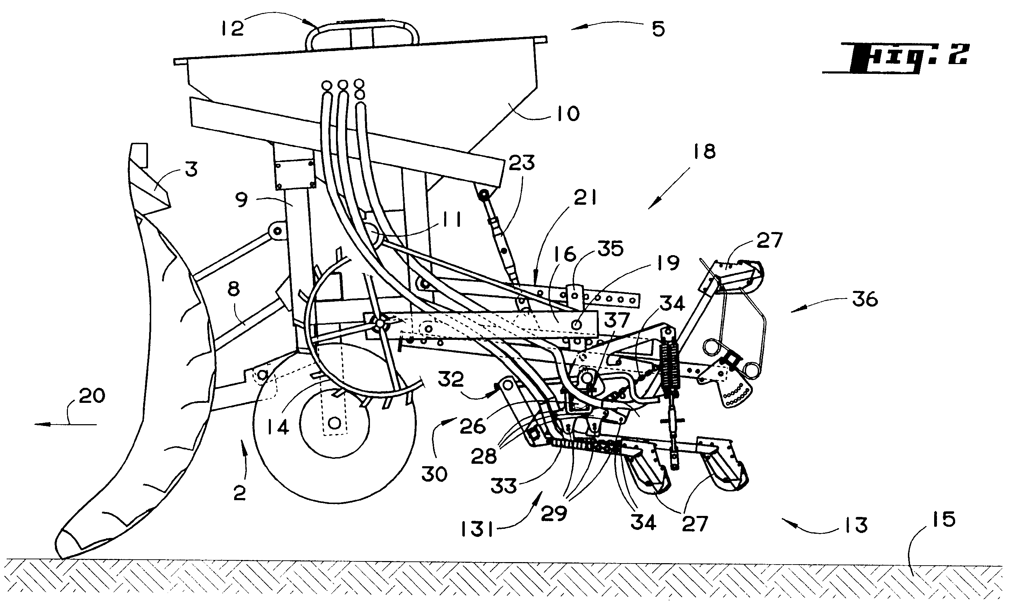

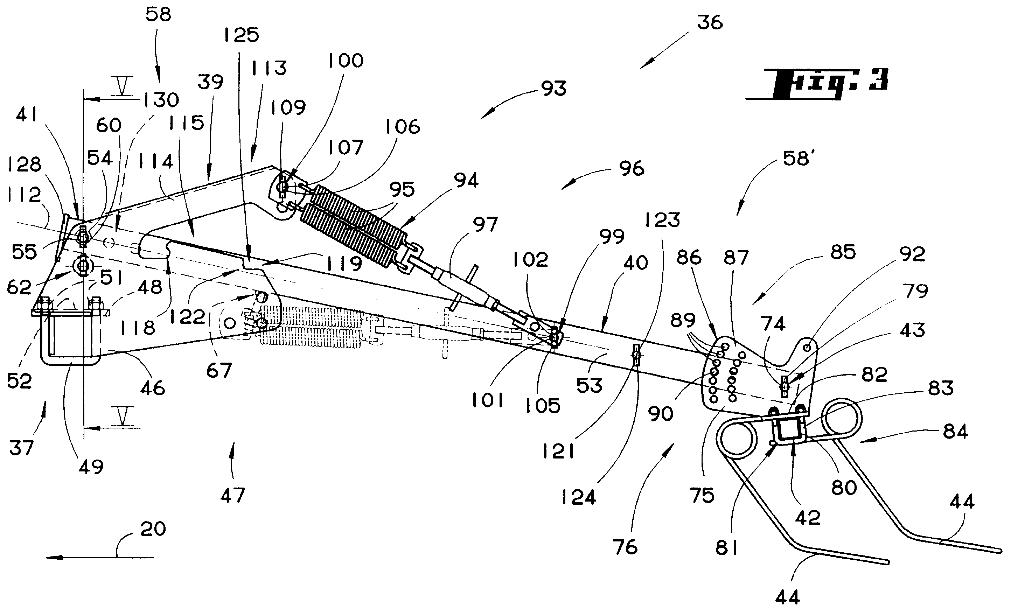

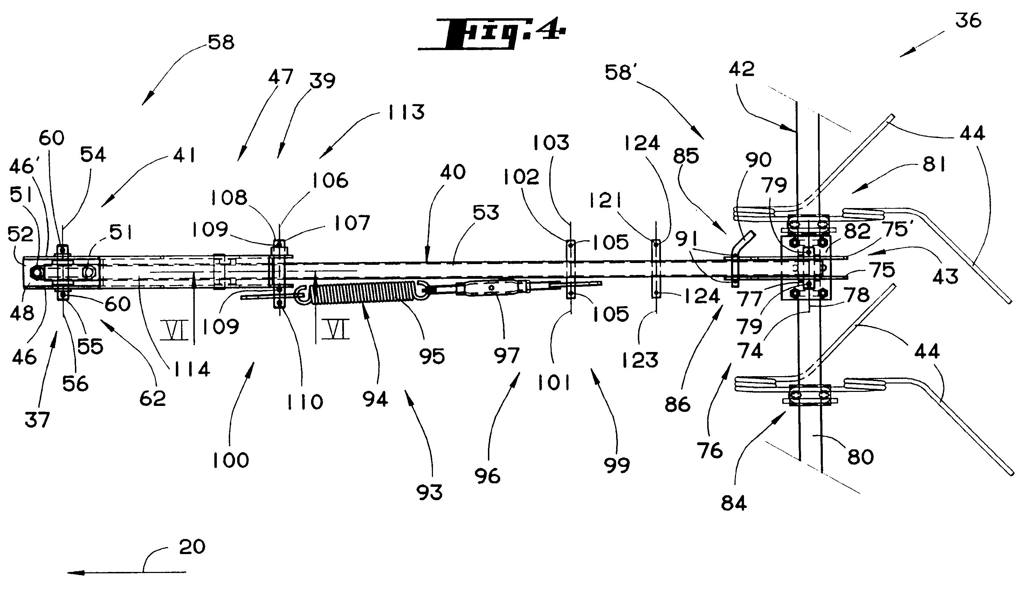

Le semoir (5) est également équipé d'un dispositif de recouvrement (36) fixé sur la traverse tubulaire (26) par un premier moyen de bridage (37). Sur les figures 3 à 7, on voit le dispositif de recouvrement (36) lequel comporte une structure support (39) destinée à être fixée sur la traverse tubulaire (26) par le premier moyen de bridage (37), un bras (40) lié à la structure support (39) au moyen d'une première articulation (41), une structure porteuse (42) s'étendant transversalement à la direction d'avance au travail (20) et liée au bras (40) au moyen d'une deuxième articulation (43) et des outils de recouvrement (44) fixés à la structure porteuse (42).

La structure support (39) comporte deux ailes (46, 46') au moins sensiblement parallèles formant une chape (47). Chaque aile (46, 46') s'étend dans un plan au moins sensiblement vertical et au moins sensiblement parallèle à la direction d'avance au travail (20). Les deux ailes (46, 46') sont destinées à être fixées sur la traverse tubulaire (26) de la structure de liaison (18) du semoir (5) au moyen du premier moyen de bridage (37). A cet effet, la structure support (39) comporte un élément d'appui (48) s'étendant entre les ailes (46, 46'), fixé à celles-ci et destiné à venir en appui sur la partie supérieure de la traverse tubulaire (26). Le premier moyen de bridage (37) quant à lui comporte une bride (49) destinée à épouser au moins sensiblement et au moins partiellement la traverse tubulaire (26), et à venir en appui d'une part sur la partie inférieure de la traverse tubulaire (26) et d'autre part sur l'élément d'appui (48).

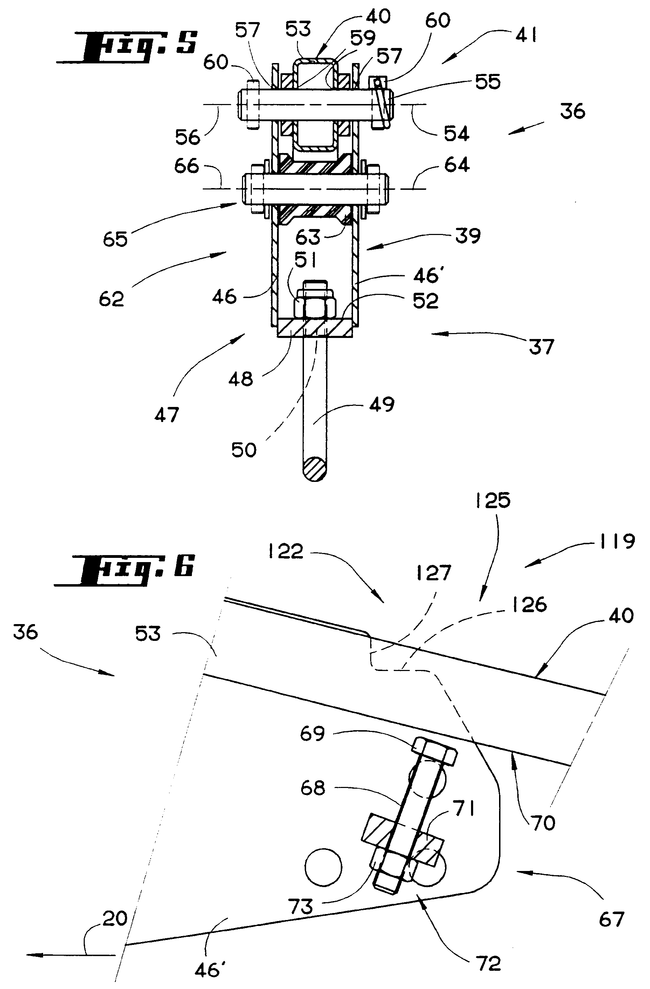

A cet effet, on voit plus précisément sur la figure 5 que la bride (49) est composée d'un profilé rond en forme de "U" dont les deux extrémités traversent l'élément d'appui (48) au moyen de deux trous de bridage (50) prévus à cet effet dans ledit élément d'appui (48). A chaque extrémité de la bride (49) est vissé un écrou (51) venant en appui sur la face supérieure (52) de l'élément d'appui (48) pour assurer un bridage correcte.

On remarquera en sus que la bride (49) en forme de "U" est située dans un plan vertical au moins sensiblement parallèle à la direction d'avance au travail (20).

Une telle conception permet avantageusement de fixer la structure support (39) à n'importe quel emplacement le long de la traverse tubulaire (26) afin d'adapter le dispositif de recouvrement (36) à différents types de semoirs.

Le bras (40) comporte un profilé tubulaire (53) de forme rectangulaire lequel s'étend vers l'arrière et vers le bas et au moins partiellement entre les deux ailes (46, 46') de la chape (47) de la structure porteuse (42) en position de travail. La première articulation (41) liant le bras (40) à la structure support (39) est située au moins sensiblement au-dessus du premier moyen de bridage (37), elle est du type pivot d'axe longitudinal (54) dirigé au moins sensiblement horizontalement et au moins sensiblement orthogonalement à la direction d'avance au travail (20) de manière à autoriser un débattement dudit bras (40) dans un plan au moins sensiblement vertical et au moins sensiblement parallèle à la direction d'avance au travail (20). A cet effet, la première articulation (41) comporte un premier tourillon (55) d'axe de rotation (56) confondu avec l'axe longitudinal (54) de la première articulation (41). Le premier tourillon (55) traverse d'une part les deux ailes (46, 46') de la chape (47) au moyen d'un premier alésage (57) prévu dans chaque aile (46, 46') et, d'autre part le profilé tubulaire (53) du bras (40) aux alentours de l'une (58) des deux extrémités (58, 58') de ce dernier au moyen d'un deuxième alésage (59). On notera également que la translation du premier tourillon (55) suivant son axe de rotation (56) est limitée au moyen de deux arrêts (60) situés chacun à l'extérieur et à proximité de l'aile (46, 46') correspondante.

Entre les deux ailes (46, 46') de la chape (47) est également implanté un moyen de coulissement (62) sur lequel est destiné à coulisser le profilé tubulaire (53) du bras (40) lors de l'escamotage ou de la mise en position de travail du dispositif de recouvrement (36). Ce moyen de coulissement (62) est situé quelque peu en-dessous de la première articulation (41) relativement proche du profilé tubulaire (53) du bras (40). Il est composé d'un galet (63) d'axe de rotation (64) au moins sensiblement horizontal et au moins sensiblement perpendiculaire à la direction d'avance au travail (20). Ledit galet (63) s'étend entre les deux ailes (46, 46') de la chape (47) et est lié à ces dernières au moyen d'une troisième articulation (65) du type pivot d'axe longitudinal (66) confondu avec l'axe de rotation (64) du galet (63).

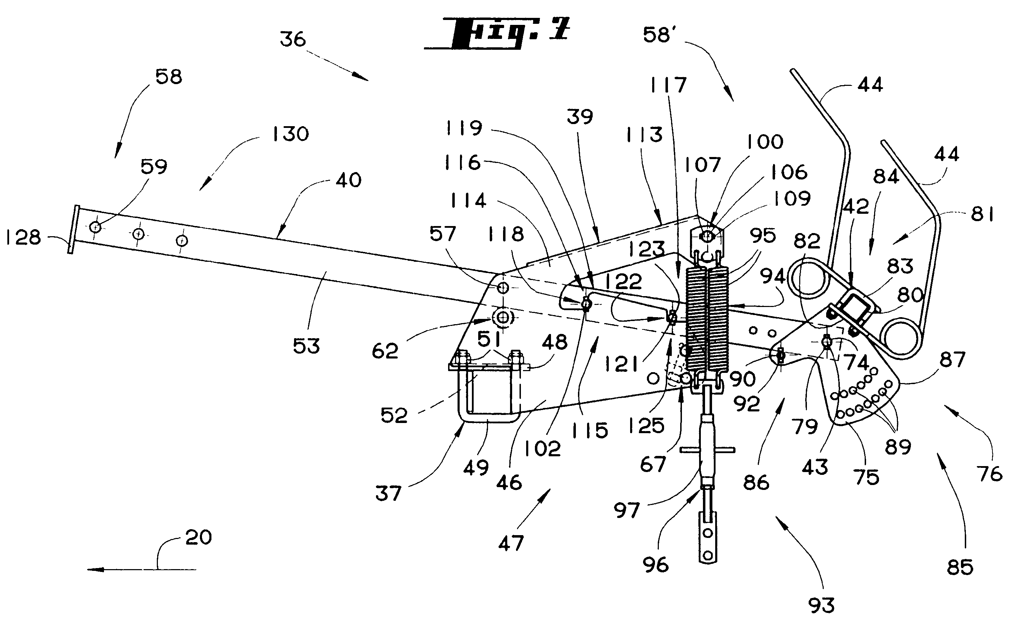

On notera également qu'il est prévu une butée réglable (67) destinée à limiter le débattement du bras (40). Cette butée réglable (67) est située sur la structure porteuse (39) quelque peu plus bas que le moyen de coulissement (62) et à l'arrière de celui-ci compte tenu de la direction d'avance au travail (20). A la lumière de la figure 6, on voit plus précisément que la butée réglable (67) comporte une vis (68) munie d'une tête de vis (69) laquelle est destinée à venir buter contre une partie inférieure (70) du profilé tubulaire (53) du bras (40) afin de limiter le débattement de celui-ci vers le bas. A cet effet, la vis (68) est vissée dans un support de butée (71) rigide, fixé d'une part aux deux ailes (46, 46') de la chape (47) et s'étendant d'autre part entre celles-ci.

La butée réglable (67) est en sus dotée d'un moyen de blocage (72) permettant de conserver la valeur de réglage de la butée réglable (67). Ce moyen de blocage (72) est constitué d'un contre-écrou (73) vissé sur la vis (68) et venant en appui sur la face inférieure du support de butée (71).

La deuxième articulation (43) liant la structure porteuse (42) au bras (40) est du type pivot d'axe longitudinal (74) au moins sensiblement horizontal et au moins sensiblement orthogonal à la direction d'avance au travail (20) et est située aux alentours de l'extrémité (58') du bras (40).

Cette deuxième articulation (43) comporte deux ailes mobiles (75, 75') formant une chape mobile (76). Chaque aile mobile (75, 75') s'étend dans un plan au moins sensiblement vertical et au moins sensiblement parallèle à la direction d'avance au travail (20). Ces ailes mobiles (75, 75') sont liées au profilé tubulaire (53) du bras (40) au moyen d'un deuxième tourillon (77) d'axe de rotation (78) confondu avec l'axe longitudinal (74) de ladite deuxième articulation (43). A cet effet, le deuxième tourillon (77) traverse d'une part les deux ailes mobiles (75, 75') de la chape mobile (76) et d'autre part le profilé tubulaire (53) du bras (40) à l'extrémité (58') de ce dernier au moyen d'alésages adéquats. La translation de ce deuxième tourillon (77) suivant son axe de rotation (78) est limitée au moyen de deux arrêts (79) situés chacun à l'extérieur et à proximité de l'aile mobile (75, 75') correspondante.

La structure porteuse (42) comporte, selon l'exemple représenté, un profilé tubulaire (80) s'étendant au moins sensiblement horizontalement et au moins sensiblement orthogonalement à la direction d'avance au travail (20). Ce profilé tubulaire (80) de la structure porteuse (42) est fixé à la chape mobile (76) par un deuxième moyen de bridage (81). A cet effet, il est prévu un deuxième élément d'appui (82) fixé, lorsque le dispositif de recouvrement (36) est en position de travail, à la partie inférieure des deux ailes mobiles (75, 75') de la chape mobile (76). Le deuxième moyen de bridage (81) comporte deux brides (83) épousant d'une part au moins sensiblement et au moins partiellement le profilé tubulaire (80) de la structure porteuse (42) et venant d'autre part se fixer au deuxième élément d'appui (82) d'une manière semblable à la bride (49) du premier moyen de bridage (37).

Les outils de recouvrement (44) sont fixés au profilé tubulaire (80) de la structure porteuse (42) de manière qu'ils s'étendent d'une part vers l'arrière et vers le bas en position de travail et sont disposés d'autre part à intervalle au moins sensiblement régulier le long dudit profilé tubulaire (80). Les outils de recouvrement (44) sont fixés au profilé tubulaire (80) par groupe de deux. A cet effet, chaque groupe d'outils (44) est fixé au profilé tubulaire (80) par un troisième moyen de bridage (84) semblable aux deux autres moyens de bridage (37, 81).

On notera encore, qu'il est prévu un premier moyen de réglage (85) de l'angle d'inclinaison des outils (44) permettant de pivoter la chape mobile (76) autour de la deuxième articulation (43). Ce premier moyen de réglage (85) comporte un moyen de verrouillage (86) permettant de verrouiller les outils de recouvrement (44) dans la position choisie. A cet effet, chaque aile mobile (75, 75') de la chape mobile (76) comporte un secteur indexé (87, 87') s'étendant, en position de travail, en avant de la deuxième articulation (43). Chaque secteur indexé (87, 87') comporte plusieurs trous (89). Chaque trou (89) de l'aile (75) est au moins sensiblement concentrique avec un trou (89) de l'aile (75') voisine. Chaque trou (89) d'une aile (75, 75') et le trou (89) correspondant de l'aile voisine (75, 75') correspond à une position d'inclinaison des outils (44).

Le moyen de verrouillage (86) comporte également une broche (90) traversant d'une part les secteurs indexés (87, 87') des ailes mobiles (75, 75') au moyen des trous (89) et d'autre part le profilé tubulaire (53) du bras (40) aux alentours de l'extrémité (58') de ce dernier au moyen d'un troisième alésage (91). On remarquera que chaque aile mobile (75, 75') comporte un trou isolé (92) lequel est situé, par rapport à la deuxième articulation (43), au moins sensiblement en face des trous (89) des secteurs indexés (87, 87'). Chaque trou isolé (92) de l'aile mobile (75) est au moins sensiblement concentrique avec le trou isolé (92) de l'aile mobile (75'). Les trous isolés (92) sont destinés à recevoir la broche (90) lorsque les outils (44) sont escamotés tel que représenté sur la figure 7. Dans ce cas de figure, la broche (90) s'étend sous le profilé tubulaire (53) du bras (40) à travers les trous isolés (92) de sorte que les outils de recouvrement (44) soient escamotés et verrouillés autour de la deuxième articulation (43) dans une position escamotée dans laquelle ils s'étendent vers le haut et/ou vers l'avant.

Le dispositif de recouvrement (36) est en sus doté d'un mécanisme de délestage ou de lestage (93) des outils de recouvrement (44) s'étendant latéralement au bras (40). Ce mécanisme de délestage ou de lestage (93) comporte un élément élastique (94) composé de deux ressorts de traction (95) et un élément d'ajustage (96) composé d'une biellette de réglage (97). Ce mécanisme de délestage ou de lestage (93) est lié d'une part au profilé tubulaire (53) du bras (40) au moyen d'une quatrième articulation (99) et d'autre part à la structure support (39) au moyen d'une cinquième articulation (100).

La quatrième articulation (99) est du type pivot d'axe longitudinal (101) au moins sensiblement horizontal et au moins sensiblement orthogonal à la direction d'avance au travail (20). A cet effet, la quatrième articulation (99) comporte un axe d'ancrage (102) dont l'axe longitudinal (103) est confondu avec l'axe longitudinal (101). Cet axe d'ancrage (102) est solidaire du bras (40), s'étend à travers le profilé tubulaire (53) dudit bras (40) et comporte en sus à chacune de ses extrémités un arrêt (105). La biellette de réglage (97) est liée pivotante à l'axe d'ancrage (102) latéralement au profilé tubulaire (53) du bras (40) entre ce dernier et l'arrêt (105) correspondant.

La cinquième articulation (100) quant à elle est également du type pivot d'axe longitudinal (106) au moins sensiblement horizontal et au moins sensiblement orthogonal à la direction d'avance au travail (20). A cet effet, la cinquième articulation (100) comporte une broche d'ancrage (107) dont l'axe longitudinal (108) est confondu avec l'axe longitudinal (106). Cette broche d'ancrage (107) traverse les deux ailes (46, 46') de la chape (47) de la structure support (39) et, est limitée en translation au moyen de deux arrêts (109). Les ressorts de traction (95) sont liés pivotant à la broche d'ancrage (107) latéralement à l'aile (46) de la chape (47). La translation des ressorts de traction (95) suivant l'axe longitudinal (108) est limitée au moyen d'un des arrêts (109) et un arrêt (110) supplémentaire situé à l'extrémité de la broche d'ancrage (107).

Le mécanisme de délestage ou de lestage (93) peut occuper deux positions, une première position dans laquelle il déleste l'ensemble constitué par le bras (40), la structure porteuse (42) et les outils de recouvrement (44) tel que représenté sur la figure 3 et, une deuxième position dans laquelle ledit mécanisme de délestage ou de lestage (93) leste l'ensemble décrit ci-dessus, tel qu'esquissé en traits mixtes fins sur la figure 3. A cet effet, on remarquera lorsque le mécanisme de délestage ou de lestage (93) occupe la première position, que la cinquième articulation (100) est située au-dessus d'une droite (112) passant par l'axe longitudinal (54) de la première articulation (41) et l'axe longitudinal (101) de la quatrième articulation (99) ce qui a pour effet de réduire la profondeur de travail des outils de recouvrement (44). Pour ce faire la structure support (39) comporte une potence (113) s'étendant vers l'arrière et vers le haut laquelle est formée par les deux ailes (46, 46') de la chape (47) de la structure support (39) et d'une plaque de renfort (114) reliant les deux ailes (46, 46'). Lorsque le mécanisme de délestage ou de lestage (93) occupe la deuxième position, la cinquième articulation (100) liant ce dernier à la structure support (39) est située en-dehors de la droite (112) tel qu'esquissé en traits mixtes fins sur la figure 3 de manière à intensifier le contact des outils de recouvrement (44) sur le sol (15) et d'augmenter la profondeur de travail desdits outils de recouvrement (44). On notera en sus qu'il est prévu différents emplacements sur la potence (113), la structure support (39) et l'élément d'ajustage (96) pour lier le mécanisme de délestage ou de lestage (93) à ladite structure support (39) et le bras (40) de manière à obtenir une plage de réglage dudit mécanisme de délestage ou de lestage (93) plus grande.

A la lumière des figures 2 et 7 on voit le dispositif de recouvrement (36) escamoté dans une position de transport. Dans cette position escamotée, l'ensemble constitué par le bras (40), la structure porteuse (42) et les outils de recouvrement (44), a été escamoté par coulissement dans la direction d'avance au travail (20) de manière à réduire l'encombrement, notamment lors du transport. Dans cette position escamotée on remarquera que le bras (40) s'étend vers l'avant alors que les outils de recouvrement (44) s'étendent près de la structure support (39) sensiblement au-dessus du dispositif d'implantation de la semence dans le sol (13) du semoir (5). A cet effet, il est prévu un moyen de maintien (115) destiné à maintenir l'ensemble constitué par le bras (40), la structure porteuse (42) et les outils de recouvrement (44) dans leur position escamotée. Ce moyen de maintien (115) comporte un dispositif d'ancrage (116) et un dispositif d'appui (117). Le dispositif d'ancrage (116) est composé de l'axe d'ancrage (102) décrit précédemment lequel est logé dans une encoche d'ancrage (118) prévue dans la structure support (39). Cette encoche d'ancrage (118) est, selon l'exemple représenté, composée de deux entailles d'ancrage (119) prévues sur les deux ailes (46, 46') correspondantes de la chape (47) de la structure support (39). Chaque entaille d'ancrage (119) s'étend vers l'arrière et, est située derrière le moyen de coulissement (62), sensiblement au pied de la potence (113) sur l'aile (46, 46') correspondante.

Le dispositif d'appui (117) quant à lui est composé d'un axe d'appui (121) lequel vient en contact sur un appui (122) prévue sur la structure support (39). Cet axe d'appui (121), d'axe longitudinal (123) au moins sensiblement horizontal et au moins sensiblement orthogonal à la direction d'avance au travail (20), est solidaire du bras (40) et s'étend à travers le profilé tubulaire (53) dudit bras (40). Cet axe d'appui (121) comporte en sus, à chacune de ses extrémités un arrêt (124). Sur la figure 6 on voit que l'appui (122) est, selon l'exemple représenté, composé de deux entailles d'appui (125) prévues sur les deux ailes (46, 46') correspondantes de la chape (47) de la structure support (39). Chaque entaille d'appui (125) comporte une première surface (126) au moins sensiblement horizontale et une deuxième surface (127) au moins sensiblement verticale sur lesquelles vient s'appuyer l'axe d'appui (121). On notera que chaque entaille d'appui (125) est située sur la même aile (46, 46') derrière l'entaille d'ancrage (119) correspondante et quelque peu plus bas que cette dernière.

Dans cette position escamotée du dispositif de recouvrement (36) on remarque que le mécanisme de délestage ou de lestage (93) est suspendu à la verticale à la structure support (39) au moyen de la cinquième articulation (100) et que ses ressorts de traction (95) sont au repos.

On notera en sus que le bras (40) comporte à son extrémité (58) une butée (128) destinée à limiter le coulissement de l'ensemble constitué par le bras (40), la structure porteuse (42) et les outils de recouvrement (44) lors de la mise en position de travail de ces derniers. A cet effet, cette butée (128) s'étend quelque peu vers le bas de manière à venir en contact sur le galet (63) afin de stopper le coulissement de l'ensemble cité ci-dessus lors de la mise en position de travail pour éviter que le bras (40) ne se défasse totalement de la structure support (39).

Le dispositif de recouvrement (36) selon l'invention est également doté d'un deuxième moyen de réglage (130) permettant d'approcher ou d'éloigner les outils de recouvrement (44) de la structure support (39). Ce deuxième moyen de réglage (130) est en fait constitué de plusieurs alésages (59) disposés l'un à côté de l'autre le long du profilé tubulaire (53) aux alentours de l'extrémité (58) du bras (40). A cet effet, chaque alésage (59) est destiné à recevoir le premier tourillon (55) permettant de lier le bras (40) à la structure support (39) dans différentes positions et d'approcher ou d'éloigner les outils de recouvrement (44) de la structure support (39) et du dispositif d'implantation de la semence dans le sol (13) en position de travail.

Il apparaît encore sur la figure 2 que chaque élément d'implantation (27) de la semence dans le sol (15) de la dernière rangée est escamotable autour de son articulation (29) de manière qu'il s'étende vers le haut. A cet effet, chaque élément d'implantation (27) de la semence dans le sol (15) est doté d'un dispositif de maintien (131) destiné à maintenir ledit élément d'implantation (27) de la semence dans le sol (15) dans une position escamotée. Ce moyen de maintien est composé du ressort de terrage (33) et de la chaînette (34) correspondante décrits précédemment.

L'escamotage du dispositif de recouvrement (36) s'effectue de la façon suivante :
- dans un premier temps, l'opérateur retire l'arrêt (105) qui est situé sur l'axe d'ancrage (102) du côté du mécanisme de délestage ou de lestage (93) afin de retirer la biellette de réglage (97) dudit axe d'ancrage (102). Une fois la biellette de réglage (97) retirée l'opérateur laisse le mécanisme de délestage ou de lestage (93) suspendu à la structure support (39). Ensuite, dans un deuxième temps l'opérateur ôte un des arrêts (60) et retire le premier tourillon (55) de son logement de manière à désolidariser le bras (40) de la structure support (39). Enfin, il ne reste plus qu'à coulisser l'ensemble constitué par le bras (40), la structure porteuse (42), et les outils de recouvrement (44) dans la direction d'avance au travail (20) jusqu'à ce que lesdits outils de recouvrement (44) s'étendent au-dessus du dispositif d'implantation de la semence dans le sol (13) du semoir (5) et que l'axe d'ancrage (102) et l'axe d'appui (121) s'étendent respectivement dans l'encoche d'ancrage (118) et l'entaille d'appui (125). Pour ce faire, l'opérateur soulève quelque peu l'ensemble cité ci-dessus et fait coulisser le profilé tubulaire (53) du bras (40) sur le galet (63) ;
- ensuite, l'opérateur peut en plus escamoter les outils de recouvrement (44) et les éléments d'implantation (27) de la dernière rangée du dispositif d'implantation de la semence dans le sol (13). Pour escamoter les outils de recouvrement (44) il suffit de retirer la broche (90), de pivoter les outils de recouvrement (44) dans leur position escamotée et d'engager ladite broche (90) dans les trous isolés (92) prévus à cet effet sur les ailes mobiles (75, 75') de la chape mobile (76) de manière que ladite broche (90) s'étende sous le profilé tubulaire (53) dudit bras (40).
   Pour escamoter les éléments d'implantation (27) de la dernière rangée, il suffit de faire pivoter chaque élément d'implantation (27) autour de son articulation (29) respective jusqu'à franchir le point culminant du dispositif de terrage (30) dudit élément d'implantation (27) de manière que le ressort de terrage (33) et la chaînette (34) correspondants maintiennent l'élément d'implantation (27) en position escamotée.

L'opérateur a également la possibilité d'escamoter la roue (14) avec le carter de transmission (16) autour de l'articulation (19) de manière qu'il s'étende vers l'avant afin de réduire davantage le porte-à-faux et l'encombrement du semoir (5) et/ou de la machine agricole combinée de travail du sol et de semis (1).

La mise en position de travail du dispositif de recouvrement (36) s'effectue de la manière inverse que celle décrite précédemment pour l'escamotage.

Finalement, différentes modifications restent possibles, notamment en ce qui concerne la constitution des divers éléments ou par substitution d'équivalents techniques, sans pour autant sortir du domaine de protection défini dans les revendications.

C'est ainsi qu'il est parfaitement possible de concevoir un dispositif de recouvrement (36) comportant plusieurs structures support (39) et plusieurs bras (40) par structure porteuse (42).

Il est également possible de réaliser une butée réglable (67) comportant une broche s'étendant transversalement à travers les deux ailes (46, 46') de la chape (47) au moyen de plusieurs paires de trous prévus à cet effet dans lesdites ailes (46, 46').

Il est encore envisageable de réaliser un dispositif de recouvrement (36) muni de vérins hydrauliques lesquels sont destinés à escamoter l'ensemble constitué par la structure porteuse (42), le bras (40) et les outils de recouvrement (44).

## Revendications

1. Dispositif de recouvrement destiné à équiper un semoir, ledit dispositif de recouvrement comportant :
- au moins une structure support (39) destinée à être fixée sur ledit semoir,
- au moins un bras (40) lié à la (les) structure(s) support (39) au moyen d'une première articulation (41),
- une structure porteuse (42) s'étendant transversalement à la direction d'avance au travail (20) et lié au(x) bras (40) au moyen d'au moins une deuxième articulation (43),
- au moins un outil de recouvrement (44) fixé à la structure porteuse (42),
- un premier moyen de réglage (85) permettant de régler l'angle d'inclinaison de l' (les) outil(s) de recouvrement (44) et, un deuxième moyen de réglage (130) permettant d'approcher ou d'éloigner le (les) outil(s) de recouvrement (44) de la (des) structure(s) support (39),
***caractérisé en ce que*** l'ensemble constitué par le (les) bras (40), la structure porteuse (42) et l' (les) outil(s) de recouvrement (44), est escamotable, par coulissement, dans la direction d'avance au travail (20) de manière à réduire l'encombrement, notamment lors du transport.

2. Dispositif de recouvrement selon la revendication 1, ***caractérisé en ce que*** chaque structure support (39) comporte deux ailes (46, 46') s'étendant chacune dans un plan au moins sensiblement parallèle à la direction d'avance au travail (20), lesdites ailes (46, 46') formant une chape (47) dans laquelle s'étend un bras correspondant (40).

3. Dispositif de recouvrement selon la revendication 1 ou 2, ***caractérisé en ce que*** chaque structure support (39) comporte un galet (63) d'axe de rotation au moins sensiblement horizontal et perpendiculaire à la direction d'avance au travail (20), sur lequel est destiné à coulisser le bras (40) correspondant lors de l'escamotage ou de la mise en position de travail du dispositif de recouvrement.

4. Dispositif de recouvrement selon l'une quelconque des revendications 1 à 3, ***caractérisé en ce que*** la première articulation (41) liant le bras (40) correspondant à la structure support (39) correspondante est du type pivot d'axe longitudinal (54) dirigé au moins sensiblement horizontalement et au moins sensiblement perpendiculairement à la direction d'avance au travail (20) de manière à autoriser un débattement dudit bras (40) autour de l'axe longitudinal (54) de ladite première articulation (41) dans un plan au moins sensiblement vertical et au moins sensiblement parallèle à ladite direction d'avance au travail (20).

5. Dispositif de recouvrement selon l'une quelconque des revendications 1 à 4, ***caractérisé en ce que*** en position escamotée chaque bras (40) s'étend vers l'avant alors que l' (les) outil(s) de recouvrement (44) s'étend(ent) près de la (des) structure(s) support (39).

6. Dispositif de recouvrement selon l'une quelconque des revendications 1 à 5, ***caractérisé en ce qu'*****il** est prévu au moins un moyen de maintien (115) destiné à maintenir l'ensemble constitué par le (les) bras (40), la structure porteuse (42) et l' (les) outil(s) de recouvrement (44), dans sa position escamotée.

7. Dispositif de recouvrement selon la revendication 6, ***caractérisé en ce que*** ledit moyen de maintien (115) comporte un dispositif d'ancrage (116) et un dispositif d'appui (117).

8. Dispositif de recouvrement selon la revendication 7, ***caractérisé en ce que*** ledit dispositif d'ancrage (116) comporte au moins un axe d'ancrage (102) solidaire du bras (40) correspondant et destiné à venir se loger dans au moins une encoche d'ancrage (118) prévue dans la structure support (39) correspondante.

9. Dispositif de recouvrement selon la revendication 7 ou 8, ***caractérisé en ce que*** ledit dispositif d'appui (117) comporte au moins un axe d'appui (121) solidaire du bras (40) correspondant et destiné à venir en contact sur un appui (122) prévu sur la structure support (39) correspondante.

10. Dispositif de recouvrement selon l'une quelconque des revendications 1 à 9, ***caractérisé en ce que*** **l**' (les) outil(s) de recouvrement (44) est (sont) escamotable(s) autour de la deuxième articulation (43) de manière qu'il(s) s'étende(nt) vers le haut et/ou vers l'avant.

11. Dispositif de recouvrement selon la revendication 10, ***caractérisé en ce qu'*****il** est prévu un moyen de verrouillage (86) permettant de verrouiller l' (les) outil(s) de recouvrement (44) dans la (leur) position escamotée.

12. Semoir comportant un dispositif de stockage (10) de la semence, un dispositif de dosage (11) de la semence, un dispositif de distribution et de véhiculage (12) de la semence véhiculant la semence depuis le dispositif de dosage (11) jusqu'à un dispositif d'implantation de semence dans le sol (13) lequel comporte des éléments d'implantation (27) de la semence dans le sol (15) disposés suivant plusieurs rangées au moins sensiblement transversales à la direction d'avance au travail (20) et un dispositif de recouvrement, ***caractérisé en ce que*** le dispositif de recouvrement est un dispositif de recouvrement selon l'une quelconque des revendications 1 à 11.

13. Semoir selon la revendication 12, ***caractérisé en ce que*** l'ensemble constitué par le (les) bras (40), la structure porteuse (42) et l' (les) outil(s) de recouvrement (44), est escamotable par coulissement dans la direction d'avance au travail (20) de manière que l' (les) outil(s) de recouvrement (44) s'étende(nt) au-dessus du dispositif d'implantation de la semence dans le sol (13).

14. Semoir selon la revendication 12 ou 13, ***caractérisé en ce que*** au moins la dernière rangée d'éléments d'implantation (27) de la semence dans le sol (15) est escamotable.

15. Semoir selon la revendication 14, ***caractérisé en ce que*** chaque élément d'implantation (27) de la semence dans le sol (15) de la dernière rangée est pivotable, vers le haut, autour d'une articulation (29) d'axe longitudinal au moins sensiblement horizontal et transversal à la direction d'avance au travail (20) et qu'il est prévu un dispositif de maintien (131) destiné à maintenir ledit élément d'implantation (27) de la semence dans le sol (15) dans une position escamotée.

16. Machine agricole combinée de travail du sol et de semis comportant une machine agricole de préparation d'un lit de semence et un semoir, ***caractérisé en ce qu***'elle utilise un semoir selon l'une quelconque des revendications 12 à 15.

## Claims

1. Earthing-over device intended to be fitted to a seeder, the said earthing-over device comprising:
- at least one support structure (39) intended to be fixed to the said seeder,
- at least one arm (40) connected to the support structure(s) (39) by means of a first articulation (41),
- a bearing structure (42) extending transversely to the direction of forward travel during work (20) and connected to the arm(s) (40) by means of at least one second articulation (43),
- at least one earthing-over implement (44) fixed to the bearing structure (42),
- a first adjusting means (85) allowing the angle of inclination of the earthing-over implement(s) (44) to be adjusted, and a second adjusting means (130) allowing the earthing-over implement(s) (44) to be moved closer to or further away from the support structure(s) (39),
***characterized in*** that the assembly consisting of the arm(s) (40), the bearing structure (42) and the earthing-over implement(s) (44) is retractable, by sliding, in the direction of forward travel during work (20) so as to reduce the bulk, particularly for transport.

2. Earthing-over device according to Claim 1, ***characterized in*** that each support structure (39) has two flanges (46, 46') each extending in a plane at least substantially parallel to the direction of forward travel during work (20), the said flanges (46, 46') forming a tread (47) in which a corresponding arm (40) extends.

3. Earthing-over device according to Claim 1 or 2, ***characterized in*** that each support structure (39) comprises a roller (63) whose axis of rotation is at least substantially horizontal and perpendicular to the direction of forward travel during work (20), over which roller the corresponding arm (40) is intended to slide when the earthing-over device is retracted or brought into the work position.

4. Earthing-over device according to any one of Claims 1 to 3, ***characterized in*** that the first articulation (41) connecting the corresponding arm (40) to the corresponding support structure (39) is of the pivot type with its longitudinal axis (54) directed at least substantially horizontally and at least substantially at right angles to the direction of forward travel during work (20) so as to allow the said arm (40) to move about the longitudinal axis (54) of the said first articulation (41) in a plane which is at least substantially vertical and at least substantially parallel to the said direction of forward travel during work (20).

5. Earthing-over device according to any one of Claims 1 to 4, ***characterized in*** that, in the retracted position, each arm (40) extends forwards whereas the earthing-over implement(s) (44) extends (extend) close to the support structure(s) (39).

6. Earthing-over device according to any one of Claims 1 to 5, ***characterized in*** that it is provided with at least one holding means (115) intended to hold the assembly consisting of the arm(s) (40), the bearing structure (42) and the earthing-over implement(s) (44) in their retracted position.

7. Earthing-over device according to Claim 6, ***characterized in*** that the said holding means (115) comprises an anchoring device (116) and a resting device (117).

8. Earthing-over device according to Claim 7, ***characterized in*** that the said anchoring device (116) comprises at least one anchoring pin (102) secured to the corresponding arm (40) and intended to be housed in at least one anchoring notch (118) made in the corresponding support structure (39).

9. Earthing-over device according to Claim 7 or 8, ***characterized in*** that the said resting device (117) comprises at least one resting pin (121) secured to the corresponding arm (40) and intended to come into contact with a rest (122) provided on the corresponding support structure (39).

10. Earthing-over device according to any one of Claims 1 to 9, ***characterized in*** that the earthing-over implement(s) (44) is (are) retractable about the second articulation (43) so that it (they) extends (extend) upwards and/or forwards.

11. Earthing-over device according to Claim 10, ***characterized in*** that it is provided with a locking means (86) allowing the earthing-over implement(s) to be locked in its (their) retracted position.

12. Seeder comprising a device (10) for storing the seed, a device (11) for metering out the seed, a device (12) for dispensing and conveying the seed conveying the seed from the metering device (11) as far as a device (13) for planting seed in the ground, which comprises elements (27) for planting seed in the ground (15) which are arranged in several rows which are at least substantially transversal to the direction of forward travel during work (20) and an earthing-over device, ***characterized in*** that the earthing-over device is an earthing-over device according to any one of Claims 1 to 11.

13. Seeder according to Claim 12, ***characterized in*** that the assembly consisting of the arm(s) (40), the bearing structure (42) and the earthing-over implement(s) (44) is retractable by sliding in the direction of forward travel during work (20) so that the earthing-over implement(s) (44) extends (extend) over the device (13) for planting seed in the ground.

14. Seeder according to Claim 12 or 13, ***characterized in*** that at least the last row of elements (27) for planting seed in the ground (15) is retractable.

15. Seeder according to Claim 14, ***characterized in*** that each element (27) for planting seed in the ground (15) belonging to the last row can be pivoted, upwards, about an articulation (29), the longitudinal axis of which is at least substantially horizontal and transversal to the direction of forward travel during work (20) and in that it is provided with a holding device (131) intended to hold the said element (27) for planting seed in the ground (15) in a retracted position.

16. Combined agricultural soil-working and seeding machine comprising an agricultural machine for preparing a seed bed and a seeder, ***characterized in*** that it employs a seeder according to any one of Claims 12 to 15.

## Patentansprüche

1. Zustreichvorrichtung, mit der eine Sämaschine versehen werden soll, wobei die Zustreichvorrichtung
- mindestens eine Stützkonstruktion (39), die an der Sämaschine befestigt werden soll,
- mindestens einen Arm (40), der mittels eines ersten Gelenks (41) mit der (den) Stützkonstruktion(en) (39) verbunden ist,
- ein Traggestell (42), das sich quer zur Fahrtrichtung (20) im Betrieb erstreckt und mittels mindestens eines zweiten Gelenks (43) mit dem (den) Arm(en) (40) verbunden ist,
- mindestens ein Zustreichwerkzeug (44), das an dem Traggestell (42) befestigt ist,
- ein erstes Einstellmittel (85), das die Einstellung des Neigungswinkels des Zustreichwerkzeugs bzw. der Zustreichwerkzeuge (44) gestattet, und ein zweites Einstellmittel (130), das die Annäherung oder Entfernung des Zustreichwerkzeugs bzw. der Zustreichwerkzeuge (44) an die bzw. von der (den) Stützkonstruktion(en) (39) gestattet, umfaßt,
***dadurch gekennzeichnet,*** daß die durch den Arm bzw. die Arme (40), das Traggestell (42) und das (die) Zustreichwerkzeug(e) (44) gebildete Anordnung durch Verschieben in Fahrtrichtung (20) im Betrieb klappbar ist, um insbesondere beim Transport den Platzbedarf zu verringern.

2. Zustreichvorrichtung nach Anspruch 1, ***dadurch gekennzeichnet,*** daß jede Stützkonstruktion (39) zwei Schenkel (46, 46') aufweist, die sich jeweils in einer zumindest im wesentlichen parallel zur Fahrtrichtung (20) im Betrieb verlaufenden Ebene erstrecken, wobei die Schenkel (46, 46') eine Gabel (47) bilden, in der sich ein dazugehöriger Arm (40) erstreckt.

3. Zustreichvorrichtung nach Anspruch 1 oder 2, ***dadurch gekennzeichnet,*** daß jede Stützkonstruktion (39) eine Rolle (63) mit im wesentlichen horizontaler und zur Fahrtrichtung (20) im Betrieb senkrechter Drehachse aufweist, auf der sich der dazugehörige Arm (40) beim Klappen oder bei der Positionierung der Zustreichvorrichtung in Arbeitsstellung verschieben soll.

4. Zustreichvorrichtung nach irgend einem der Ansprüche 1 bis 3, ***dadurch gekennzeichnet,*** daß es sich bei dem ersten Gelenk (41), das den dazugehörigen Arm (40) mit der dazugehörigen Stützkonstruktion (39) verbindet, um ein Drehgelenk mit einer zumindest im wesentlichen horizontal und zumindest im wesentlichen senkrecht zur Fahrtrichtung (20) im Betrieb ausgerichteten Längsachse (54) handelt, damit eine Verschiebung des Arms (40) um die Längsachse (54) des ersten Gelenks (41) in einer zumindest im wesentlichen vertikalen und zumindest im wesentlichen parallel zur Fahrtrichtung (20) im Betrieb verlaufenden Ebene gestattet wird.

5. Zustreichvorrichtung nach irgend einem der Ansprüche 1 bis 4, ***dadurch gekennzeichnet,*** daß sich jeder Arm (40) in geklappter Position nach vorne erstreckt, während sich das (die) Zustreichwerkzeug(e) (44) nahe der Stützkonstruktion(en) (39) erstreckt (erstrecken).

6. Zustreichvorrichtung nach irgend einem der Ansprüche 1 bis 5**, *dadurch gekennzeichnet,*** daß mindestens ein Haltemittel (115) vorgesehen ist, das die durch den(die) Arm(e) (40), das Traggestell (42) und das (die) Zustreichwerkzeug(e) (44) gebildete Anordnung in ihrer geklappten Position halten soll.

7. Zustreichvorrichtung nach Anspruch 6, ***dadurch gekennzeichnet,*** daß das Haltemittel (115) eine Verankerungsvorrichtung (116) und eine Stützvorrichtung (117) enthält.

8. Zustreichvorrichtung nach Anspruch 7, ***dadurch gekennzeichnet,*** daß die Verankerungsvorrichtung (116) mindestens eine fest mit dem dazugehörigen Arm (40) verbundene Verankerungsachse (102) aufweist, die in mindestens einer in der dazugehörigen Stützkonstruktion (39) vorgesehenen Verankerungskerbe (118) aufgenommen werden soll.

9. Zustreichvorrichtung nach Anspruch 7 oder 8, ***dadurch gekennzeichnet,*** daß die Stützvorrichtung (117) mindestens eine fest mit dem dazugehörigen Arm (40) verbundene Stützachse (121) aufweist, die mit einer an der dazugehörigen Stützkonstruktion (39) vorgesehenen Stütze (122) in Kontakt kommen soll.

10. Zustreichvorrichtung nach irgend einem der Ansprüche 1 bis 9, ***dadurch gekennzeichnet,*** daß das (die) Zustreichwerkzeug(e) (44) um das zweite Gelenk (43) so klappbar ist (sind), daß es (sie) sich nach oben und/oder nach vorne erstreckt (erstrecken).

11. Zustreichvorrichtung nach Anspruch 10, ***dadurch gekennzeichnet,*** daß ein Verriegelungsmittel (86) vorgesehen ist, das die Verriegelung des (der) Zustreichwerkzeugs (Zustreichwerkzeuge) in seiner (ihrer) geklappten Position gestattet.

12. Sämaschine, die eine Vorrichtung (10) zur Lagerung des Saatguts, eine Vorrichtung zur Dosierung (11) des Saatguts, eine Vorrichtung (12) zur Verteilung und zur Beförderung des Saatguts, die das Saatgut von der Dosiervorrichtung (11) bis zu einer Vorrichtung (13) zum Ablegen von Saatgut in den Boden befördert, welche Elemente (27) zum Ablegen des Saatguts in den Boden (15) aufweist, die in mehreren zumindest im wesentlichen quer zur Fahrtrichtung (20) im Betrieb verlaufenden Reihen angeordnet sind, und eine Zustreichvorrichtung aufweist, ***dadurch gekennzeichnet,*** daß es sich bei der Zustreichvorrichtung um eine Zustreichvorrichtung nach irgend einem der Ansprüche 1 bis 11 handelt.

13. Sämaschine nach Anspruch 12, ***dadurch gekennzeichnet,*** daß die durch den Arm bzw. die Arme (40), das Traggestell (42) und das (die) Zustreichwerkzeug(e) (44) gebildete Anordnung durch Verschieben in Fahrtrichtung (20) im Betrieb so klappbar ist, daß sich das (die) Zustreichwerkzeug(e) (44) über der Vorrichtung (13) zum Ablegen des Saatguts in den Boden erstreckt (erstrecken).

14. Sämaschine nach Anspruch 12 oder 13, ***dadurch gekennzeichnet,*** daß mindestens die letzte Reihe von Elementen (27) zum Ablegen des Saatguts in den Boden (15) klappbar ist.

15. Sämaschine nach Anspruch 14, ***dadurch gekennzeichnet,*** daß jedes Element (27) zum Ablegen des Saatguts in den Boden (15) der letzten Reihe nach oben um ein Gelenk (29) mit einer zumindest im wesentlichen horizontal und zur Fahrtrichtung (20) im Betrieb quer verlaufenden Längsachse schwenkbar ist und daß eine Haltevorrichtung (131) vorgesehen ist, die das Element (27) zum Ablegen des Saatguts in den Boden (15) in einer geklappten Position halten soll.

16. Kombinierte Landmaschine zur Bodenbearbeitung und zum Säen, die eine Landmaschine zur Vorbereitung eines Saatbettes und eine Sämaschine umfaßt, ***dadurch gekennzeichnet,*** daß sie eine Sämaschine nach irgend einem der Ansprüche 12 bis 15 verwendet.
